# EUROPÄISCHE PATENTSCHRIFT

(11) **EP 1 800 193 B1**
(45) Veröffentlichungstag und Bekanntmachung des Hinweises auf die Patenterteilung: **01.07.2009**
(21) Anmeldenummer: 05787208.7
(22) Anmeldetag: 16.09.2005
(51) Int. Cl.: G05B 19/418

(54) **VERFAHREN ZUM BETREIBEN EINES MODULAR AUFGEBAUTEN FELDGERÄTES DER AUTOMATISIERUNGSTECHNIK**
METHOD FOR OPERATING A MODULARLY CONSTRUCTED AUTOMATION TECHNOLOGY FIELD DEVICE
PROCEDE D'EXPLOITATION D'UN APPAREIL DE CHAMP, DE STRUCTURE MODULAIRE, RELEVANT DE LA TECHNIQUE DE L'AUTOMATISATION

(30) Priorität: 12.10.2004 DE 102004049771
(43) Veröffentlichungstag der Anmeldung: 27.06.2007
(73) Patentinhaber: Endress + Hauser Flowtec AG, 4153 Reinach (CH)
(72) Erfinder: BORST, Walter, 65626 Fachingen (DE); KOUDAL, Ole, CH-5400 Baden (CH); SEIFERT, Oliver, 79713 Bad Säckingen (DE)
(74) Vertreter: Andres, Angelika Maria
(86) Internationale Anmeldenummer: PCT/EP2005/054626
(87) Internationale Veröffentlichungsnummer: WO 2006/040238

(56) Entgegenhaltungen:
- EP-A- 1 093 039
- EP-A- 1 093 069
- DE-A1- 10 313 389

## Beschreibung

Die Erfindung betrifft ein Verfahren zum Betreiben eines modular aufgebauten Feldgerätes der Automatisierungstechnik gemäß dem Oberbegriff des Anspruchs 1.

Beispiele für Feldgeräte sind Füllstandsmessgeräte, Massedurchflussmessgeräte, Druck- und Temperaturmessgeräte, etc., die als Sensoren die entsprechenden Prozessvariablen Füllstand, Durchfluss, Druck bzw. Temperatur erfassen.

Zur Beeinflussung des Prozesses dienen Aktoren, wie zum Beispiel Ventile oder Pumpen, die es ermöglichen, den Durchfluss einer Flüssigkeit in einem Rohrleitungsabschnitt oder den Füllstand in einem Behälter zu ändern.

Allgemein werden Feldgeräte prozessnah eingesetzt um prozessrelevante Informationen zu liefern oder zu verarbeiten.

Eine Vielzahl solcher Feldgeräte wird von der Firma Endress+Hauser hergestellt und vertrieben.

Mit zunehmender Tendenz werden Feldgeräte über moderne Kommunikationssysteme (Profibus, Foundation Fieldbus, HART, etc.) mit übergeordneten Einheiten, zum Beispiel Leitsystemen oder Steuereinheiten verbunden. Diese dienen zur Prozessvisualisierung, Prozessüberwachung oder zur Inbetriebnahme des Kommunikationssystems sowie zur Prozesssteuerung.

Heutige Feldgeräte sind häufig modular aufgebaut. Dadurch können Feldgeräte bei der Herstellung sehr einfach an unterschiedliche Kundenwünsche angepasst werden.

Sehr oft bestehen Feldgeräte aus einzelnen Modulen, einem Netzteilmodul, einem Verstärkermodul und einem Ein/Ausgabemodul, wobei das Netzteilmodul und das Ein-/Ausgabemodul meist als ein einziges Modul ausgebildet sind.

Die Funktionalitäten eines Feldgeräts werden neben der Hardware auch in zunehmendem Masse durch die eingesetzte Gerätesoftware (Firmware) bestimmt.

Häufig weisen Feldgeräte neben Basisfunktionen noch zusätzliche Softwarefunktionalitäten auf, die nur über entsprechende Sicherheitscodes freigeschaltet werden können. Die numerischen Werte der Sicherheitscodes werden im Feldgerät auf der Basis der Seriennummer des betreffenden Gerätes mit Hilfe von mathematischen Algorithmen gewonnen. Nur wenn der am Feldgerät eingegebene Sicherheitscode mit dem Wert des berechneten Codes übereinstimmt, wird die zu diesem Sicherheitscode gehörende Funktionalität freigeschaltet.

Sicherheitscodes müssen normalerweise vom Anwender direkt bei der Inbetriebnahme des Feldgerätes direkt am Feldgerät über ein Display mit Tastatur bzw. über ein tragbares Bediengerät eingegeben werden.

Eine Alternative bieten Speicherchips, in denen der Sicherheitscode abgespeichert ist und die am oder im Feldgerät in einen entsprechenden Steckplatz einzusetzen sind. Ein derartiger Speicherchip ist aus der

Europäischen Patentschrift EP 1093069 bekannt. Unter der Bezeichnung F-Chip bietet die Firma Endress+Hauser einen Speicherchip für ihre Feldgeräte der Linie "Proline" an.

Ein Vorteil, den die Speicherchip-Lösung für Sicherheitscodes bietet, besteht darin, dass der Anwender den Chip auch bei anderen baugleichen Geräten einsetzen kann, um gleiche Softwarefunktionalitäten freizuschalten. Insbesondere nach einer Reparatur eines Feldgerätes, wenn z. B. ein Austausch eines Elektronikmoduls erforderlich war, kann der Speicherchip ohne Probleme weiterhin eingesetzt werden.

Außerdem bietet ein Speicherchip eine relativ hohe Sicherheit gegen das unberechtigte Kopieren von Sicherheitscodes.

Bei einigen Feldgeräten ist der Einsatz eines derartigen Speicherchips jedoch nicht möglich, weil mechanisch und bautechnisch bedingt, kein Raum für einen entsprechenden Steckanschluss im oder am Feldgerätegehäuse zur Verfügung steht.

Eine Alternative zu einem Speicherchip besteht darin, den Sicherheitscode fest in einem Speicher, auf den der Hauptprozessor des Feldgerätes Zugriff hat, abzuspeichern und die Gültigkeit des Codes bei der Inbetriebnahme des Gerätes jeweils zu prüfen.

Es ist jedoch nicht auszuschließen, dass bei einer Reparatur eines Feldgerätes das Elektronikmodul mit dem Speicher, in dem der Sicherheitscode abgespeichert ist, ausgetauscht werden muss, so dass der Sicherheitscode nach einer Reparatur nicht mehr verfügbar ist.

In diesem Fall muss der Anwender bei der erneuten Inbetriebnahme des Feldgerätes nach der Reparatur den Sicherheitscode nochmal eingeben. Ein solches Verfahren ist für den Anwender äußerst aufwendig und zeitraubend. Die betreffende Person, die die Inbetriebnahme durchführt, kennt möglicherweise den Sicherheitscode nicht und muss diesen erst aufwendig in Erfahrung bringen. Eventuell ist Person, die das Feldgerät installiert nicht zur Eingabe eines Sicherheitscodes berechtigt oder nicht qualifiziert.
Weitere Möglichkeiten die Software des Feldgeräts mit einem Sicherheits-Code zu schützen und die Eingabe des den Sicherheits-Codes zu vereinfachen, sind in den beiden folgenden Patentdokumenten angeführt.
In der Deutschen Patent-Offenlegungsschrift DE 103 13 389 A1 wird ein Verfahren zum Übertragen von einem Software-Code bzw. Sicherheits-Code von einer Steuereinheit zu einem Feldgerät beschrieben, bei dem der Softwarecode in einen Gerätetreiber, z.B. DTM, integriert ist und mit Hilfe eines Bedienprogramms ins Feldgerät übertragen wird.
Ergänzend hierzu ist in der Europäischen Patentanmeldung EP 1 093 039 A1 eine Möglichkeit des Schutzes der Software eines Feldgeräts über einen an einer Schnittstelle des Feldgeräts angeschlossenen Kopierschutzstecker, engl. Dongle, gezeigt. Hierzu ist in dem Kopierschutzstecker bzw. Dongle ein Mikrocontroller vorgesehen, der ein Steuerprogramm ausführt, das zur Berechtigungsprüfung der Zugriffsanfrage auf die Software dient und das gegen Auslesen der Software des Feldgerätes geschützt ist.

Aufgabe der Erfindung ist es deshalb, ein Verfahren zum Betreiben eines modular aufgebauten Feldgerätes der Automatisierungstechnik anzugeben, das die oben genannten Nachteile nicht aufweist, das insbesondere auch nach einer Reparatur des Feldgerätes eine einfache Inbetriebnahme ermöglicht.

Gelöst wird diese Aufgabe durch die im Anspruch 1 angegebenen Merkmale.

Die wesentliche Idee der Erfindung besteht darin, bei der Inbetriebnahme des Feldgerätes zuerst eine Prüfung durchzuführen, ob ein Austausch eines Elektronikmoduls stattgefunden hat. Hierzu wird in jedem Elektronikmodul des Feldgerätes werkseitig die Seriennummer des Feldgerätes abgespeichert. Austauschmodule weisen lediglich einen Defaultwert als Seriennummer z. B. 000000 auf.

Über eine Plausibilitätsprüfung der Seriennummer lässt sich deshalb leicht feststellen, ob das betreffende Modul ausgetauscht wurde.

Falls ein Modulaustausch stattgefunden hat und das Modul deshalb keine plausible Seriennummer aufweist, wird die plausible Seriennummer eines anderen Moduls in dieses Modul übernommen.

Am Ende dieser Abgleichprozedur weisen alle Module die gleiche Seriennummer nämlich die "richtige" Seriennummer des Gerätes auf.

Nach der Prüfung, ob ein Modulaustausch stattgefunden hat, erfolgt die Prüfung, ob in einem der Module ein gültiger Sicherheitscode gespeichert ist.

Wird festgestellt, dass in einem Elektronikmodul ein ungültiger Sicherheitscode gespeichert ist, so wird dieser gegen einen gültigen Sicherheitscode eines anderen Elektronikmoduls ausgetauscht.

Entsprechend dem/den gültigen Softwarecode(s) werden die zugehörigen Softwarefunktionalitäten freigeschaltet.

Für den Fall dass keines der Elektronikmodule eine plausible Seriennummer aufweist, erfolgt die Sperrung aller zusätzlichen Softwarefunktionalitäten, die über Sicherheitscodes freigeschaltet werden können.

Ein wesentlicher Vorteil, den die Erfindung bietet, besteht darin, dass auch beim Austausch von Elektronikmodulen normalerweise keine manuelle Eingabe des Sicherheitscodes bei der Inbetriebnahme von Feldgeräten notwendig ist.

Weiterhin ist gewährleistet, dass in allen Modulen eines Feldgerätes die "richtige" Geräte-Seriennummer und der gleiche Sicherheitscode abgespeichert sind.

Nachfolgend ist die Erfindung anhand eines in der Zeichnung dargestellten Ausführungsbeispiels näher erläutert.

Es zeigen:

Fig. 1 Kommunikationsnetzwerk der Automatisierungstechnik;

Fig. 2 Explosionsdarstellung eines modular aufgebauten Feldgerätes;

Fig. 3 Blockschaltbild eines Feldgerätes gemäß Fig. 2;

Fig. 4 Flussdiagramm;

Fig. 5 vereinfachte Darstellung der im Feldgerät gespeicherten Daten nach Durchführung des erfindungsgemäßen Verfahrens.

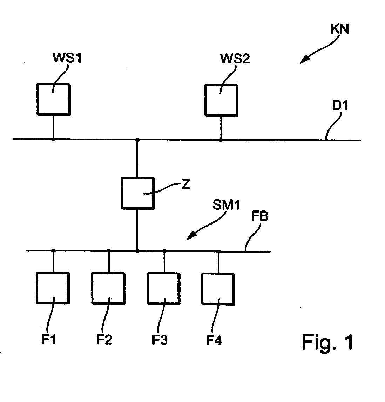

In Fig. 1 ist ein Kommunikationsnetzwerk KN der Automatisierungstechnik näher dargestellt. An einen Datenbus D1 sind mehrere Rechnereinheiten, Workstations WS 1, WS2, angeschlossen. Diese Rechnereinheiten dienen als übergeordnete Einheiten zur Prozessvisualisierung, Prozessüberwachung und zum Engineering sowie zum Bedienen und Überwachen von mehreren Feldgeräten. Der Datenbus D1 arbeitet zum Beispiel nach dem Profibus DP-Standard oder nach dem HSE (High Speed Ethernet-Standard) der Foundation Fieldbus. Über eine Zwischeneinheit Z z. B. ein Controller, eine speicherprogrammierbare Steuerung (SPS) oder ein Gateway, das auch als Linking Device oder als Segmentkoppler bezeichnet wird, ist der Datenbus D1 mit einem Feldbussegment SM1 verbunden. Das Feldbussegment SM1 besteht aus mehreren Feldgeräten F1, F2, F3, F4, die über einen Feldbus FB miteinander verbunden sind. Bei den Feldgeräten F1, F2, F3, F4 handelt es sich sowohl um Sensoren wie auch um Aktoren. Der Feldbus arbeitet nach einem der bekannten Kommunikationsstandards der Automatisierungstechnik Profibus, Foundation Fieldbus oder HART.

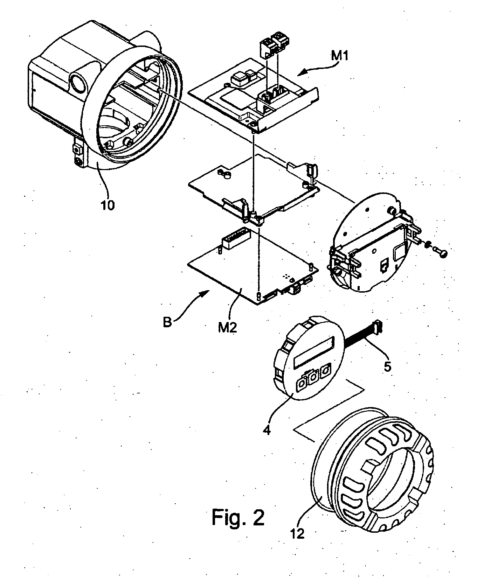

In Fig. 2 ist die Elektronik eines modular aufgebauten Feldgerätes in einer Explosionsdarstellung näher dargestellt. Die Geräteelektronik besteht im Wesentlichen aus zwei Elektronikmodulen; einem Hauptmodul, dem Verstärkermodul M1, und einem I/ O-Modul, dem Ein-/Ausgabemodul M2.

Die Module sind über entsprechende Steckverbinder miteinander verbindbar. Zur Datenübertragung zwischen den Modulen M1 und M2 dient ein IIC-Bus.

Weiterhin ist eine Anzeige-Bedieneinheit 4 vorgesehen, die mit dem Verstärkermodul M1 über eine Kabelverbindung 5 anschließbar ist.

Im Verstärkermodul M1 erfolgt im Wesentlichen die Signalverarbeitung des vom Sensor gelieferten Messsignals.

Das Ein/Ausgabemodul M2 dient hauptsächlich zur Datenkommunikation und weist hierfür verschieden Signalausgänge (z. B. Stromausgänge, Impulsausgänge) bzw. eine Feldbusschnittstelle (HART, Profibus, Foundation Fieldbus) auf. Die Module M1, M2 sowie die Anzeige-Bedieneinheit 4 sind in einem Gehäuse 10 mit einem aufschraubbaren Gehäusedeckel 12 angeordnet.

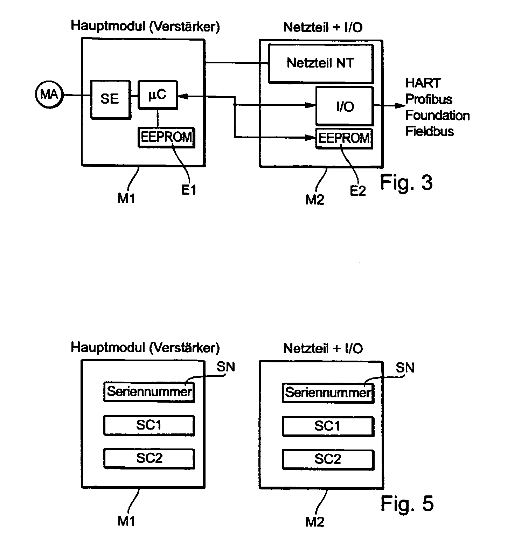

In Fig. 3 ist ein Blockschaltbild der Geräteelektronik gemäß Fig. 2 näher dargestellt. Das Verstärkermodul M1 besteht im Wesentlichen aus einer Signalverarbeitungseinheit SE mit einem nachgeschaltetem Mikrocontroller µC. Die Signalverarbeitungseinheit SE, die einen Analog-/Digitalwandler umfassen kann, dient zur Vorverarbeitung eines Messsignals, das von einem Messaufnehmer MA (z. B. Temperaturfühler) geliefert wird.

Die weitere Signalverarbeitung findet im Mikrocontroller µC statt. Als Datenspeicher E1 dient ein EEPROM-Speicher.

Über ein Ein-/Ausgabemodul M2 mit einer I/O-Einheit kann die Messinformation an übergeordnete Einheiten weitergeleitet werden. Die I/O-Einheit kann einen Impulsausgang, einen Frequenzausgang oder eine Feldbusschnittstelle besitzen.

Neben der I/O-Einheit weist das Ein-/Ausgabemodul M2 noch einen EEPROM-Speicher als Datenspeicher E2 und ein Netzteil NT, das zur Spannungsversorgung der Geräteelektronik dient, auf.

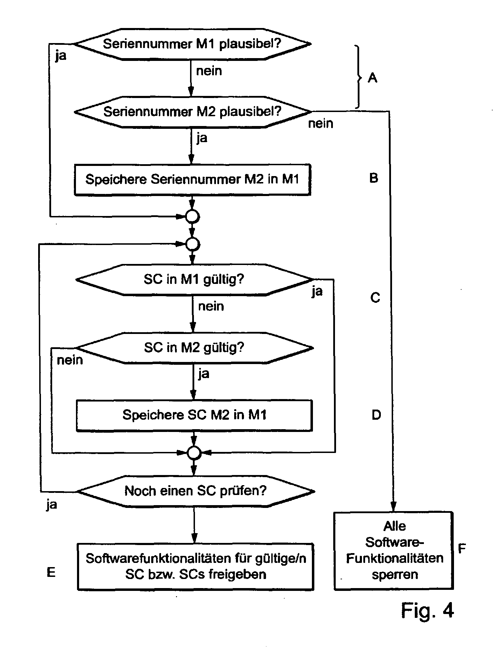

Nachfolgend ist das erfindungsgemäße Verfahren anhand des in Fig. 4 dargestellten Flussdiagramms näher erläutert:

Bei der Inbetriebnahme des Feldgerätes wird u. a. überprüft, welche Softwarefunktionalitäten für dieses Gerät freizuschalten sind.

Hierzu ist ein entsprechendes Programm im Mikrocontroller µC des Verstärkermoduls M2 implementiert.

In einem ersten Verfahrensschritt A erfolgt eine Prüfung, ob das Verstärkermodul M1 ausgetauscht wurde. Hierzu wird der Speicherwert für die Seriennummer des Feldgerätes aus dem Datenspeicher E1 des Moduls M1 ausgelesen und einer Plausibilitätsprüfung unterzogen.

Falls die im Verstärkermodul M1 gespeicherte Seriennummer nicht plausibel ist, erfolgt ein Prüfung, ob das Ein-/Ausgabemodul M2 ausgetauscht wurde. Hierzu wird die im Speicher E2 des Ein-/Ausgabemoduls M2 gespeicherte Seriennummer ausgelesen und einer Plausibilitätsprüfung unterzogen.

In einem Verfahrensschritt B wird, falls z. B. das Ein/Ausgabemodul M2 eine plausible Seriennummer und das Verstärkermodul M1 keine plausible Seriennummer aufweist, die plausible Seriennummer des Ein/Ausgabemoduls M2 in das Verstärkermodul M1 übertragen.

In einem Verfahrensschritt C erfolgt die Überprüfung, ob in einem der Elektronikmodule M1 oder M2 ein gültiger Sicherheitscodes SC abgespeichert ist. Falls in einem Modul ein ungültiger Sicherheitscode SC gespeichert ist, wird gegebenenfalls der gültige Sicherheitscode eines anderen Moduls in dieses Modul in einem Verfahrensschritt D übertragen.

Falls mehrere Sicherheitscodes vorliegen, erfolgt eine weitere Überprüfung, ob in einem der Elektronikmodule M1 oder M2 ein weiterer gültiger Sicherheitscodes SC abgespeichert ist.

Im Verfahrensschritt E erfolgt das Freischalten der zu dem/den gültigen Softwarecode(s) gehörenden Softwarefunktionalitäten.

Falls beide Elektronikmodule M1 und M2 eine nicht plausible Seriennummer bzw. in keinem der beiden Module gültige Sicherheitscodes SC vorliegen, werden in einem Verfahrensschritt F alle Softwarefunktionalitäten, die über Sicherheitscodes freischaltbar sind, gesperrt.

Erfindungsgemäß wird im Feldgerät mit Hilfe eines entsprechenden Algorithmus aus der Seriennummer des Gerätes ein Sicherheitscode-Wert berechnet. Bei der Prüfung, ob ein gültiger Sicherheitscode vorliegt, wird der berechnete Wert des Sicherheitscodes mit dem gespeicherten Wert eines Sicherheitscodes verglichen. Nur wenn beide Werte übereinstimmen, liegt ein gültiger Sicherheitscode vor. Normalerweise erfolgen die Überprüfung des Sicherheitscodes und die Plausibilitätsprüfung der Seriennummer im Verstärkermodul M1, das als Mastermodul dient. Dies trifft zum Beispiel bei einem Feldgerät mit einer HART-Schnittstelle zu. Diese Geräte werden einfach als HART-Geräte bezeichnet.

Handelt es sich bei dem Feldgerät um ein Profibus-Gerät, also ein Feldgerät mit einer Profibus-Schnittstelle, so ist das Ein-/Ausgabemodul M2 das Mastermodul.

Der Grund hierfür liegt darin, dass bei busfähigen Feldgeräten, ein bzw. mehrere Sicherheitscodes SC nur über entsprechende Bedienwerkzeuge eingegeben werden können, die direkt auf das Ein-/Ausgabemodul M2 als Mastermodul zugreifen. Das Ein-/Ausgabemodul M2 reicht die vom Bedienwerkzeug angesprochenen Dienste gegebenenfalls zum Verstärkermodul M1 weiter.

Mit dem erfindungsgemäßen Verfahren ist gewährleistet, dass in jedem Elektronikmodul des Feldgerätes identische Seriennummer und identische Softwarecodes SC abgespeichert sind, dies ist nochmal in Fig. 5 anschaulich dargestellt. Die im Verstärkermodul M1 gespeicherte Seriennummer SN stimmt mit der im Ein-/Ausgabemodul M2 gespeicherten Seriennummer SN überein.

Bei dem betreffenden Feldgerät sind zwei Sicherheitscodes SC1 und SC2 in den beiden Modulen M1 und M2 abgespeichert. Auch diese stimmen jeweils überein.

Durch das angegebene Verfahren wird die Inbetriebnahme von Feldgeräten nach einer Reparatur, bei der einzelne Module des Feldgeräts ausgetauscht wurden, erheblich vereinfacht. Der Anwender kann das Feldgerät sofort in Betrieb nehmen. Er muss keine Softwarecodes aufwendig von Hand eingeben. Für den Fall, dass mehrere Module gültige Softwarecodes bzw. plausible Seriennummern aufweisen sind die Werte des jeweiligen Mastermoduls entscheidend. In diesem Fall werden immer die Daten vom Mastermodul in das/die anderen Module übertragen.

## Patentansprüche

1. Verfahren zum Betreiben eines modular aufgebauten Feldgerätes der Automatisierungstechnik, das mehrere austauschbare Elektronikmodule M1, M2 aufweist und das Softwarefunktionalitäten besitzt, die über einen Sicherheitscode SC freischaltbar sind,
**gekennzeichnet durch** folgende Verfahrensschritte:
- A. Prüfung ob im Feldgerät ein Modulaustausch stattgefunden hat, indern mindestens die im Datenspeicher E1des Elektronikmoduls M1 abgespeicherte Seriennummern SN ausgelesen und der Speicherwert einer Plausibilitätsprüfung unterzogen wird,
- B. Falls das Modul M1 keine plausible Seriennummer und das Modul M2 eine plausible Seriennummer SN aufweist, wird die plausible Seriennummer SN in das Elektronikmodul M1 übertragen,
- C. Prüfung ob im Feldgerät ein gültiger Sicherheitscode SC vorliegt, indem mindestens der im Datenspeicher E1 des Elektronikmoduls M1 abgespeicherte Sicherheitscode SC ausgelesen wird und der Speicherwert mit dem berechneten Wert des Sicherheitscode verglichen wird,
- D. Bei Vorliegen eines ungültigen Sicherheitscodes im Elektronikmodul M1 und eines gültigen Sicherheitscodes SC im Elektronikmodul M2 wird der gültige Sicherheitscode in das Elektronikmodul M1 übertragen,
- E. Freigabe der Softwarefunktionalitäten entsprechend dem/den gültigen Sicherheitscode(s) SC, und
- F. Falls keine plausible Seriennummer vorliegt, Sperrung aller Softwarefunktionalitäten, die über Sicherheitscodes freischaltbar sind.

2. Verfahren nach Anspruch 1, **dadurch gekennzeichnet, dass** der Sicherheitscode SC von der Seriennummer SN des Feldgeräts abhängig ist und mit Hilfe eines entsprechenden Algorithmus im Feldgerät berechnet wird und eine Prüfung ob ein gültiger Sicherheitscode vorliegt, **dadurch** erfolgt, dass der berechnete Wert des Sicherheitscodes mit dem gespeicherten Wert des Sicherheitscodes verglichen wird.

3. Verfahren nach Anspruch 2, **dadurch gekennzeichnet, dass** Austausch-Modulen eine Seriennummer zugewiesen wird (z. B. 0000000), die einfach als nicht plausibel erkennbar ist.

4. Verfahren nach einem der vorhergehenden Ansprüche, **dadurch gekennzeichnet, dass** das Feldgerät mindestens zwei Elektronikmodule, ein Verstärkermodul M1 und ein Ein/Ausgabemodul M2 aufweist.

5. Verfahren nach Anspruch 4, **dadurch gekennzeichnet, dass** die Überprüfung der Sicherheitscodes SC und die Plausibiltätsprüfung der Seriennummern SN in einem Master-Modul erfolgt.

6. Verfahren nach einem der vorhergehenden Ansprüche, **dadurch gekennzeichnet, dass** bei HART-Feldgeräten, das Verstärkermodul M1 das Master-Modul ist.

7. Verfahren nach einem der vorhergehenden Ansprüche, **dadurch gekennzeichnet, dass** bei Profibus-Feldgeräten, das Ein/Ausgabemodul M2 das Master-Modul ist.

8. Verfahren nach einem der vorhergehenden Ansprüche, **dadurch gekennzeichnet, dass** in einem Feldgerät mehrer Sicherheitscodes (z. B. SC1, SC2) für unterschiedliche Funktionalitäten gespeichert sind.

## Claims

1. Method for operating a modular field device used in automation engineering that exhibits several exchangeable electronic modules M1, M2 and has software functions that can be enabled using a security code SC, **characterized by** the following process steps:
- A. The system checks whether a module has been replaced in the field device by reading out, at least, the serial numbers SN saved in the data memory E1 of the electronics module M1, and performing a plausibility check on the value stored.
- B. If the module M1 does not exhibit a plausible serial number and the module M2 exhibits a plausible serial number SN, the plausible serial number SN is transmitted to the electronics module M1.
- C. The system checks whether a valid security code SC is present in the field device by reading out, at least, the security code SC saved in the data memory E1 of the electronics module M1 and comparing the value stored to the calculated value of the security code.
- D. If an invalid security code is present in the electronics module M1 and a valid security code SC is present in the electronics module M2, the valid security code is transmitted to the electronics module M1.
- E. The software functions are enabled as per the valid security code(s) SC
- F. If a plausible serial number is not available, all the software functions that can be enabled using the security codes are disabled.

2. Method as per Claim 1, **characterized in that** the security code SC depends on the serial number (SN) of the field device, and is calculated using an appropriate algorithm in the field device. The system verifies whether the security code present is valid by comparing the calculated value of the security code to the security code value saved.

3. Method as per Claim 2, **characterized in that** replacement modules are assigned a serial number (e.g. 0000000) that is easily recognized as implausible.

4. Method as per one of the previous claims, **characterized in that** the field device exhibits at least two electronic modules, an amplifier module M1 and an input/output module M2.

5. Method as per Claim 4, **characterized in that** the security code SC is verified and the plausibility of the serial numbers SN is checked in a master module.

6. Method as per one of the previous claims, **characterized in that** the amplifier module M1 is the master module in the case of HART field devices.

7. Method as per one of the previous claims, **characterized in that** the input/output module M2 is the master module in the case of Profibus field devices.

8. Method as per one of the previous claims, **characterized in that** multiple security codes (e.g. SC1, SC2) for different functions are saved in a field device.

## Revendications

1. Procédé destiné à l'exploitation d'un appareil de terrain de structure modulaire de la technique d'automatisation, lequel comprend plusieurs modules électroniques M1, M2 interchangeables et possède des fonctionnalités logicielles, qui peuvent être débloquées au moyen d'un code de sécurité SC,
**caractérisé par** les étapes de procédé suivantes :
- A. Contrôle si un échange de module a eu lieu dans l'appareil de terrain, en ce qu'au moins les numéros de série SN enregistrés dans la mémoire de données E1 du module électronique M1 sont lus et la valeur mémoire est soumise à un contrôle de plausibilité,
- B. Si le module M1 ne comporte pas de numéro de série plausible et si le module M2 contient un numéro de série SN plausible, le numéro de série plausible SN est transféré dans le module électronique M1,
- C. Contrôle si un code de sécurité SC valable est présent dans l'appareil de terrain, en ce qu'au moins le code de sécurité SC enregistré dans la mémoire de données E1 du module électronique M1 est lu et la valeur mémoire est comparée avec la valeur calculée du code de sécurité,
- D. En présence d'un code de sécurité non valable dans le module électronique M1 et d'un code de sécurité SC valable dans le module électronique M2, le code de sécurité valable est transféré dans le module électronique M1,
- E. Déblocage des fonctionnalités logicielles en fonction du/des code(s) de sécurité SC valable(s), et
- F. Si aucun numéro de série plausible n'est présent, blocage de l'ensemble des fonctionnalités logicielles, qui peuvent être débloquées par le biais de codes de sécurité.

2. Procédé selon la revendication 1, **caractérisé en ce que** le code de sécurité SC dépend du numéro de série SN de l'appareil de terrain et est calculé dans l'appareil de terrain à l'aide d'un algorithme approprié, et un contrôle de présence d'un code de sécurité valable est effectué **en ce que** la valeur calculée du code de sécurité est comparée avec la valeur mémorisée du code de sécurité.

3. Procédé selon la revendication 2, **caractérisé en ce qu'**un numéro de série est attribué aux modules interchangeables (p. ex. 0000000), qui est reconnaissable simplement comme étant non plausible.

4. Procédé selon l'une des revendications précédentes, **caractérisé en ce que** l'appareil de terrain comporte au moins deux modules électroniques, un module amplificateur M1 et un module d'entrée/sortie M2.

5. Procédé selon la revendication 4, **caractérisé en ce que** le contrôle des codes de sécurité SC et le contrôle de plausibilité des numéros de série SN s'effectuent dans un module maître.

6. Procédé selon l'une des revendications précédentes, **caractérisé en ce que**, dans le cas d'appareils HART, le module amplificateur M1 est le module maître.

7. Procédé selon l'une des revendications précédentes, **caractérisé en ce que**, dans le cas d'appareils Profibus, le module d'entrée/sortie M2 est le module maître.

8. Procédé selon l'une des revendications précédentes, **caractérisé en ce que**, dans un appareil de terrain, plusieurs codes de sécurité (p. ex. SC1, SC2) sont enregistrés pour différentes fonctionnalités.
